(19) Europäisches Patentamt
European Patent Office
Office européen des brevets

(11) **EP 2 404 190 B1**

(12) **EUROPÄISCHE PATENTSCHRIFT**

(45) Veröffentlichungstag und Bekanntmachung des Hinweises auf die Patenterteilung:
**26.06.2013 Patentblatt 2013/26**

(21) Anmeldenummer: **10716742.1**

(22) Anmeldetag: **09.02.2010**

(51) Int Cl.:
*G01S 7/292* *(2006.01)*    *G01S 13/22* *(2006.01)*

(86) Internationale Anmeldenummer:
**PCT/DE2010/000143**

(87) Internationale Veröffentlichungsnummer:
**WO 2010/099773 (10.09.2010 Gazette 2010/36)**

(54) **VERFAHREN ZUR DETEKTION VON WINDKRAFTANLAGEN MITTELS EINER RADARANLAGE**

METHOD FOR DETECTING WIND POWER PLANTS USING A RADAR SYSTEM

PROCÉDÉ DE DÉTECTION D'ÉOLIENNES AU MOYEN D'UNE INSTALLATION RADAR

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **06.03.2009 DE 102009012064**

(43) Veröffentlichungstag der Anmeldung:
**11.01.2012 Patentblatt 2012/02**

(73) Patentinhaber: **EADS Deutschland GmbH**
**85521 Ottobrunn (DE)**

(72) Erfinder: **WEISS, Andreas**
**7551 Stegersbach (AT)**

(74) Vertreter: **Riegel, Werner et al**
**EADS Deutschland GmbH,**
**Patentabtlg.., DSLAIP1**
**88039 Friedrichshafen (DE)**

(56) Entgegenhaltungen:
EP-A1- 1 657 565    DE-A1- 19 750 742
US-A1- 2008 111 731

• VILHELM GREGERS-HANSEN ET AL: "EMI repair in pulse doppler radar" RADAR CONFERENCE, 2008. RADAR '08. IEEE, IEEE, PISCATAWAY, NJ, USA, 26. Mai 2008 (2008-05-26), Seiten 1-6, XP031376076 ISBN: 978-1-4244-1538-0

**Beschreibung**

Die Erfindung betrifft ein Verfahren zur Detektion von Windkraftanlagen mittels einer Radaranlage gemäß den Merkmalen des Oberbegriffs des Patentanspruchs 1.

Eine Windkraftanlage (WKA) wandelt die kinetische Energie des Windes in elektrische Energie um. Aus vielen verschiedenartigen Konzepten, haben sich Anlagen mit horizontaler Drehachse, die dem Wind nachgeführt werden durchgesetzt. Sie bestehen meist aus einem zylindrischen Stahl Turm mit einer Nabe am Ende, von der drei aerodynamisch geformte Rotoren ausgehen. Die Höhe des Turmes, die Höhe der Nabe und die Rotorenlänge variieren je nach Leistung der Turbine bzw. dem Aufstellungsort. Folgend eine Übersicht typischer Abmessungen :

| Kategorie | 1,5 | 3 | 5 |
|---|---|---|---|
| Rotorlänge (m) | 38 | 45 | 62 |
| Nabenhöhe (m) | 60-110 | 80-105 | 100-120 |
| Gesamthöhe (m) | 98-148 | 125-150 | 162-182 |
| Umdrehungsrate (rpm) | 17 | 16 | 12 |
| Flügelspitzengeschw. (m/s) | 68 | 76 | 79 |

Die maximale Geschwindigkeit der Rotoren wird an den Rotorspitzen gemessen. Sie errechnet sich nach der Formel:

$$u = \lambda * v$$

mit

u : Geschwindigkeit an der Rotorspitze
$\lambda$ : Schnelllaufzahl
v : Windgeschwindigkeit

Die Schnelllaufzahl $\lambda$ ist abhängig von der Art der WKA und beträgt bei den heute üblicherweise eingesetzten Anlagen 7 bis 8. Moderne Windkraftanlagen arbeiten nur im Bereich ab einer Minimalen bis zu einer maximalen Windgeschwindigkeit. Außerdem werden sie mittels Stellmotoren in die optimale Position zur Windrichtung gedreht und sind drehzahlgeregelt, d.h. die Umdrehungsgeschwindigkeit wird annähernd konstant gehalten und ändert sich nur kontinuierlich.

Grundsätzlich sind von WKA folgende typische Begebenheiten bekannt:

a) Ortsfest
Eine Windkraftanlage befindet sich immer in der gleichen Rangezelle(x,y), d.h. die Entfernung und der Azimuthwinkel sind konstant
b) Drehzahlregelung der Rotoren
Moderne WKA's verändern die Drehzahl der Rotoren nur kontinuierlich d.h. es gibt keine sprunghaften Änderungen der Rotorgeschwindigkeit und somit der Dopplerfrequenzverschiebung.
c) Konstanter Einsatzbereich
Moderne WKA's benötigen zum Betrieb eine minimale Windgeschwindigkeit und schalten sich ab einer maximalen Windgeschwindigkeit ab. Dies bedeutet die Rotorgeschwindigkeit, welche von der Windgeschwindigkeit abhängt bewegt sich innerhalb eines definierten Bereiches.
d) Bauliche Einschränkungen
Der Mindestabstand zwischen einzelnen Anlagen ist sowohl technisch als auch durch physikalische Effekte vorgegeben. Phänomene wie Windschatteneffekte sowie Maßnahmen zur Minimierung von Vogelschlag, Lärmbelästigung, usw. geben einen gewissen Mindestabstand zwischen einzelnen Windkraftanlagen vor.

WKAs zeichnen sich ferner durch einen großen Rückstrahlquerschnitt (RCS) aus. Der Rückstrahlquerschnitt im S-Band (2,7 - 2,9 GHz) und L-Band (ca. 1,3 GHz) von derzeit üblichen WKA Turbinen kann bis zu 300 000 m$^2$ betragen. Die Rotorblätter einzeln betrachtet können einen Spitzenwert von bis zu 30 000 m$^2$ erreichen. Im Vergleich

hierzu hat ein mehrstrahliges Verkehrsflugzeug einen RCS von 5 bis 20 m$^2$. Die oben genannten RCS Werte für Windkraftanlagen bezeichnen Spitzenwerte, die abhängig sind von der Stellung der Rotorblätter sowie dem Aspektwinkel des Radars. Deshalb ändert sich der RCS der Windkraftanlage ständig und sprunghaft. [C.A. Jackson, Windfarm Characteristics and their Effect on Radar Systems, Proc. International Conference on Radar Systems, Edinburgh, October 2007]

Das ständige und sprunghafte Ändern des RCS einer WKA erzeugt den Effekt des so genannten ‚glint'. Dies bedeutet das vollkommen zufällig Echosignale auftauchen. Sind mehrere Windkraftanlagen in einem Windpark zusammengefasst, kommt es in diesem Bereich zu voneinander unabhängigen, zufälligen Glints. Diese zufällig auftretenden Echos liegen im gleichen Bereich der Dopplerverschiebung, in dem auch viele mögliche Ziele für das Radar liegen. Dieses "Aufblitzen" führt zu einer Reihe von Problemen:

a) Störungen (Clutter) : Erhöhte Anzahl von Detektionen im Bereich von Windparks, verursacht durch die Echos der WKA Rotoren.
b) Desensibilisierung:
Verminderte Wahrscheinlichkeit der Detektion eines Luftzieles über oder in der Nähe von Windparks, sowohl in Azimuth als auch in Entfernungsrichtung.
c) Trajektorienverlust:
Tracking eines Zieles im Bereich von Windparks ist nicht möglich.

Aus US 2008/11131 A1 ist ein Verfahren zur Detektion von Windkraftanlagen mittels einer Radaranlage bekannt.

Aufgabe der Erfindung ist es ein Verfahren anzugeben, mit welchem eine Windkraftanlage zuverlässig unter Vermeidung der Nachteile aus dem Stand der Technik detektiert werden kann.

Diese Aufgabe wird durch das Verfahren gemäß den Merkmalen des geltenden Patentanspruchs 1 gelöst. Vorteilhafte Ausführungen der Erfindung sind Gegenstand von Unteransprüchen.

Das erfindungsgemäße Verfahren umfasst folgende Verfahrensschritte:

a. zeitlich nacheinander werden eine Anzahl N vorgebbarer Folgen $B_x$, mit x=1,...,N, von K modulierten Sendeimpulsen mit jeweils einer vorgebbaren Pulsfolgefrequenz ausgesandt,
b. es wird eine vorgebbare Anzahl von Pulsfolgefrequenzen verwendet,
c. nach jeder ausgesandten Folge wird zyklisch auf eine andere Pulsfolgefrequenz umgeschaltet,
d. von einem Objekt reflektierte Sendeimpulse werden von der Radaranlage empfangen und verarbeitet derart, dass den Sendeimpulsen entsprechende Empfangsimpulse entstehen, wobei für jeden Sendeimpuls eine Anzahl R Empfangsimpulse empfangen werden,
e. aus den zu Folgen $B_x$ von modulierten Sendeimpulsen gehörenden Empfangsimpulsen wird mittels Signallaufzeitmessung die Entfernung zu dem Objekt ermittelt, und eine Entfernungs-Doppler-Matrix mit R Zeilen und N*K Spalten erzeugt,
f. in einem Azimuthbereich wird zyklisch eine Anzahl M von Messvorgängen in eine Azimuthrichtung durchgeführt, wobei bei jedem Messvorgang N Folgen $B_x$ von modulierten Sendeimpulsen in die jeweilige Azimuthrichtung ausgesendet werden, und für jeden Messvorgang M eine Entfernungs-Doppler-Matrix erzeugt wird,
g. Abtastwerte von Z, mit Z=2... N, Folgen $B_N$ von modulierten Sendeimpulsen aus M Messvorgängen werden mittels eines vorgebbaren Korrekturterms aneinandergereiht und verarbeitet, wobei mittels eines Maximum Likelihood Schätzers eine harmonische Schwingung mit der kleinsten quadratischen Abweichung zu den Abtastwerten berechnet wird,
h. durch Anwenden des Maximum Likelihood Schätzer wird aus der Entfernungs-Dopplermatrix mit R Zeilen und N*K Spalten eine Ergebnismatrix mit R Zeilen und N/Z Spalten wobei für jede Zelle die Signalstärke, Phase und Dopplerfrequenz des Objekts bekannt ist,
i. nach den Verfahrensschritten a)-h) werden zeitlich nacheinander zwei Ergebnismatrizen E1, E2 erzeugt, welche miteinander verglichen werden, wobei eine Entfernungs-Dopplerzelle als Standort einer Windkaftanlage markiert wird, wenn

i. die Signalstärke einer Entfernungs-Dopplerzelle in beiden Ergebnismatrizen E1, E2 oberhalb eines vorgebbaren Schwellwertes liegt und
ii. die Dopplerfrequenzverschiebung in einer Entfernungs-Dopplerzelle in beiden Ergebnismatrizen E1, E2 innerhalb eines für Windkraftanlagen üblichen Wertebereichs liegt und
iii. die Differenz der Dopplerfrequenzen in einer Entfernungs-Dopplerzelle in beiden Ergebnismatrizen E1, E2 unterhalb eines vorgegeben Schwellwertes liegt.

Das erfindungsgemäße Verfahren geht aus von einer Detektion mittels eines Pulsradars, zweckmäßig von einem Rundsuchradar. Ein solches Rundsuchradar kann z.B. ein Radargerät sein, welches sich voll um seine Senkrechtachse dreht und die Umgebung nach Objekten absucht. Dabei wird ein vorgegebener Raumwinkelbereich pro Umlauf einmal ausgeleuchtet. Ein Rundsuchradar kann aber auch ein Phased Array Radar sein, welches einen vorgegebenen Raumwinkelbereich zyklisch ausleuchtet.

Das Sendesignal eines Pulsradars ist eine Folge $B_x$ (Burst), mit x=1,...,N, einzelner Pulse, die auf eine hochfrequente Trägerschwingung aufmoduliert sind. Ein Burst kann z.B. 8 Pulse umfassen. Die Pulse werden über die Radarantenne abgestrahlt und entfernen sich vom Radar. Treffen sie auf ein Zielobjekt, werden sie von ihm in verschiedene Richtungen reflektiert, unter Anderem zurück zum Radar. Dort wird ihr Echo nach einer gewissen Zeit wieder empfangen. Das Echo ist eine Kopie des Sendesignals, die sich in der Amplitude und der Frequenz von dem Original unter scheidet. Die Unterschiede, insbesondere Laufzeit und Dopplerverschiebung, zwischen dem Sendesignal und dem empfangenen Echo erlauben es, Rückschlüsse auf die Position und die Geschwindigkeit des Zielobjektes zu ziehen.

Um den auftretenden Aliasing Effekt, d.h. die Nichteindeutigkeit der Dopplerfrequenzschätzung, einzuschränken, wird die Zeit zwischen dem Aussenden zweier Pulse (PRI = Pulse Repetition Intervall) variiert.

Dabei können in an sich bekannter Weise insbesondere bei der Ermittlung der Entfernung des Zieles störende Mehrdeutigkeiten auftreten. Das heißt, zu jeder vorgebbaren Pulswiederholfrequenz (PRF, "Pulse Repetition Frequency") gibt es einen Entfernungs-Eindeutigkeitsbereich. Dieser ist um so kleiner, je höher die PRF gewählt ist. Andererseits wird eine hohe PRF (HPRF, "High Pulse Repetition Frequency") benötigt, um auch bei schnell bewegten Zielen einen möglichst hohe Geschwindigkeitseindeutigkeitsbereich zu erhalten. Soll bei einem vorgebbaren hohen Geschwindigkeitseindeutigkeitsbereich ein großer erweiterter Entfernungs-Eindeutigkeitsbereich vorhanden sein, so kann eine HPRF-Radaranlage mit mindestens zwei umschaltbaren PRFs verwendet werden. Dabei erfolgt im allgemeinen bei jeder Aussendung eines Bursts ein Wechsel der PRF, das heißt, es wird im allgemeinen zyklisch zwischen den verwendeten PRFs umgeschaltet. Es werden nun die zu jeder PRF gehörenden empfangenen Echopulse ausgewertet und mit denjenigen anderer PRFs verglichen. Unter der Annahme, dass ein Ziel von den Pulsen mehrerer unterschiedlicher PRFs getroffen wird, kann sowohl die Geschwindigkeit des Zieles als auch dessen Entfernung in dem erweiterter Entfernungs-Eindeutigkeitsbereich ermittelt werden.

Eine Variation der PRF ist nicht nur von einem Puls zum nächsten möglich. So werden bei Radaren mit Dopplerfrequenzmessung die PRF für Gruppen von Pulsen konstant gelassen, aber zwischen verschiedenen Gruppen variiert. Eine Gruppe mit konstantem Pulsfolgeintervall und somit konstanter Pulsfolgefrequenz wird als Pulsfolge oder Burst bezeichnet. Werden die Pulsfolgefrequenzen in einem festen Verhältnis zueinander festgelegt, wird von einer Staffelung der Pulsfolgefrequenz gesprochen. Diese unterschiedlichen Pulsfolgen $B_x$ werden nun in einer konstanten Reihenfolge ausgeführt. Daraus ergibt sich ein Abtastschema, das sich wiederholt. Eine solche Wiederholung wird als Dwell bezeichnet. Nachfolgend ist beispielhaft die Abfolge von 3 Dwells dargestellt, wobei jedes Dwell aus 3 Bursts besteht:

| Burst1 | Burst2 | Burst3 | Burst1 | Burst2 | Burst3 | Burst1 | Burst2 | Burst3 |
|--------|--------|--------|--------|--------|--------|--------|--------|--------|
|        | Dwell1 |        |        | Dwell2 |        |        | Dwell3 |        |

Das durch das Radar beobachtete Gebiet wird durch das Abtastschema und durch die Rangeauflösung in eine Matrix unterteilt. Die Rangeauflösung ergibt sich aus den Signallaufzeiten der einzelnen Pulse.

Ein Puls wird ausgesendet, die Laufzeit $t_L$ bis zum Ziel und zurück berechnet sich aus:

$$t_L = 2 \cdot \frac{R}{c}$$

wobei

  c : Lichtgeschwindigkeit
  R : Entfernung des Ziels

ist.

Daraus folgt, dass aus dem Ankunftszeitpunkt des Echosignals, im Vergleich zum Sendezeitpunkt die Entfernung des Objekts das das Echo produziert hat errechnet werden kann. Daraus ergibt sich, dass nach Aussenden eines Pulses und Empfang der eingetroffenen Echos ein Spaltenvektor entsteht, wobei die Einordnung in die Zeile nach der errechneten Entfernung geschieht. z.B.: Empfangszeitpunkt 20 μs nach dem Senden des Pulses, das Objekt das das Echo erzeugt hat liegt in rund 2997 Meter Entfernung. Der nächste Puls erzeugt wieder einen Spaltenvektor. Werden diese Spaltenvektoren unter Berücksichtigung der Azimuthrichtung, in welche die Sendesignale ausgestrahlt wurden, aneinandergereiht, erhält man eine Entfernungs-Azimuthmatrix.

Bekanntermaßen werden zur Auswertung der Echosignale von den zu einer Folge $B_x$ von modulierten Sendeimpulsen gehörenden modulierten Empfangsimpulsen innerhalb eines vorgegebenen Abtastzeitraums zu vorgegebenen Abtastzeitpunkten eine Folge $S(B_x)$ Abtastwerte erzeugt [Mahr et al.]. Bei Radaranlagen welche einen vorgegebenen Azimuthbereich ausleuchten wird in einem Azimuthbereich zyklisch eine Anzahl M von Messvorgängen in eine Azimuthrichtung durchgeführt.

Mit anderen Worten, pro Umlauf des Radargeräts findet ein Messvorgang in dem betreffenden Bereich statt. Die Anzahl M von Messvorgängen bezieht sich somit auf die Anzahl der in Betracht kommenden Umläufe des Radargerät über den betreffenden Azimuthbereich. Bei jedem Messvorgang (Umlauf) werden N Folgen $B_x$ von modulierten Sendeimpulsen in die jeweilige Azimuthrichtung ausgesendet. Bei der Auswertung der Echosignale werden Folgen $S_m(B_x)$, mit m=1,..,M, von Abtastwerten erzeugt. Diese Folgen von Abtastwerten werden im Folgenden auch als Scan bezeichnet.

Bei dem im folgenden erläuterten Verfahren wird eine an sich bekannte Radaranlage verwendet. Diese besteht insbesondere aus einer (Radar-)Antenne zur Aussendung von gepulsten Sendesignalen in einem vorgebbaren (Radar-)Frequenzbereich und zum Empfang der entsprechenden Echosignale. Diese werden in an sich bekannter Weise in einen vorgebbaren Zwischenfrequenzbereich herabgemischt und anschließend demoduliert, so dass Pulse entstehen, aus denen mittels einer Laufzeitmessung sowohl die Geschwindigkeit als auch die Entfernung eines oder mehrerer Ziele ermittelt werden kann. Aus EP 0 919 834 B1 ist die grundsätzliche Auswertung solcher Sende- und Empfangssignale bekannt, wobei zur Detektion von Zielen Entfernungs-Doppler-Matrizen mit einer vorgebbaren Anzahl von Entfernungs-Doppler-Zellen erzeugt werden.

Erfindungsgemäß werden aufgenommenen Scans, also die Folgen $S_m(B_x)$ von Abtastwerten von N Folgen $B_N$ von modulierten Sendeimpulsen aus M Messvorgängen, aneinandergereiht und mittels eines Maximum Likelihood Schätzers verarbeitet. Bei diesem Schätzer handelt es sich in einer vorteilhaften Ausführung der Erfindung um den Sinus-Fit-Algorithmus, welcher in [Mahr et al.] ausführlich beschrieben ist.

Beim Sinus-Fit-Algorithmus handelt es sich um einen Maximum Likelihood Schätzer der die kleinste quadratische Abweichung zu einer harmonischen Schwingung errechnet. Bei Vorliegen der Abtastpunkte $f_n = f(x_n)$ der komplexen sinusförmigen Schwingung mit den Parametern Amplitude A, Phase $\alpha$ und Frequenz f , werden die gesuchten Parameter durch das Minimieren des Parameters Q ermittelt:

$$Q := \sum_{n-1}^{N} \left(g(x_n) - f_n\right) * conj\left(g(x_n) - f_n\right)$$

wobei

g : eine Modellfunktion mit den Parametern $p_1,...,p_n$
$f_n$ : Abtastwerte (Samples)

sind.

Bei Annahme einer sinusförmigen komplexen Schwingung wird die Modellfunktion g zu:

$$g := A * e^{\left(i \cdot 2 \cdot \pi \cdot f \cdot x + \alpha\right)}$$

wobei

A : Amplitude
f : Frequenz
x : Abtastzeitpunkt
$\alpha$ : Phase

ist.

Wie in [Mahr et al.] beschrieben, ergibt sich daraus ein lineares Gleichungssystem für die Amplitude A und die Phase $\alpha$ bei konstanter Frequenz f :

$$\alpha = \arctan\frac{\gamma}{\beta}$$

$$A = \frac{\beta^2 + \gamma^2}{N\beta}\cos\alpha$$

$$Q - Q_0 = A * [A * N - 2 * (\beta\cos\alpha + \gamma\sin\alpha)]$$

mit

$$\beta = \sum_{n}^{N} \Re(f_n)\cos(2 * \pi * f * x_n) + \Im(f_n)\sin(2 * \pi * f * x_n)$$

$$\gamma = \sum_{n}^{N} \Im(f_n)\cos(2 * \pi * f * x_n) - \Re(f_n)\sin(2 * \pi * f * x_n)$$

$$Q_0 = \sum_{n}^{N} f_n * conj(f_n)$$

Mit Hilfe dieses linearen Gleichungssystems kann durch einsetzen verschiedener Werte für die Frequenz f und anschließendem Finden des Minimums der Abweichung, die den Abtastpunkten x zugrunde liegende Sinusschwingung rekonstruiert werden.

Bei stationären Nahbereichsradaren, z.B. Rundsichtradaren vergeht zwischen dem Ausleuchten der selben Entfernungszelle, also zwischen den einzelnen Umläufen und somit den einzelnen Messvorgängen, eine gewisse Zeit t (abhängig vom Radartyp meist 2 bis 5 Sekunden). Die Windkraftanlage befindet sich relativ zum Radar immer in der gleichen Zelle und erzeugt aufgrund der Drehzahlregelung der Rotoren annähernd die gleiche Dopplerfrequenzverschiebung.

Bei der erfindungsgemäßen Verarbeitung werden nun die Pulse die eine Entfernungszelle ausleuchten aus mehreren zeitlich nacheinander folgenden Scans aneinandergereiht und verarbeitet. Daraus ergibt sich eine Vervielfachung der zur Berechnung verwendbaren Samples. Die Samplewerte in jedem Scan werden zweckmäßig an derselben azimutalen Position aufgenommen. Beim Aneinanderreihen der Samples verschiedener Scans kommt es zu einem Phasensprung, da die Zeit t zwischen den Umläufen nicht einem ganzzahligen Vielfachen der Periodendauer der Suchfrequenzen entspricht.

Mit anderen Worten, bei der Aneinanderreihung der Folgen $S_m(B_x)$ von Abtastwerten aus M Messvorgängen kommt es zu einem Phasensprung benachbarter Folgen $S_m(B_x)$ von Abtastwerten, wenn die jeweils benachbarten Folgen aus unterschiedlichen Messvorgängen stammen. Vorteilhaft wird eine Phasenkorrektur vorgenommen, wobei die einzelnen Abtastwerte eines Scans n+1 gegenüber einem zeitlich vorgelagerten Scan n um einen Korrekturterm shift verschoben werden. Dieser Korrekturterm $t_{shift}$ berechnet sich wie folgt:

$$t_{shift} = \frac{\varphi_1 - \varphi_2}{f_s}$$

$\varphi_1$.....Phase Puls Scan n
$\varphi_2$.....Phase Puls Scan n + 1

$f_s$......Suchfrequenz

Die Abtastzeitpunkte des Scan n+1 werden nun um $t_{shift}$ verschoben, worauf sie mit Scan n für die Suchfrequenz $f_s$ die gleiche Phase besitzen. Die eingesetzten Suchfrequenzen in denen das Echo einer WKA liegen kann bewegen sich in einem festen Bereich. Dies ist eine direkte Folgerung des Merkmals des konstanten Einsatzbereiches von WKAs d.h. entweder das Windrad erzeugt eine Dopplerfrequenzverschiebung in den Suchfrequenzen oder es bewegt sich nicht, und erzeugt somit auch keine Störungen. Die Suchfrequenzen sind beliebig genau skalierbar, d.h. wenn z.B.: ein Bereich von 600 bis 1200 Hz abgesucht wird, kann sowohl in 10 Hz Schritten als auch in 0,1 Hz Schritten gesucht werden.

In einer ersten Variante der Erfindung wird bei der Aneinanderreihung der Abtastwerte der zeitlich aufeinanderfolgenden Messvorgängen der Dwell eines Scans an den nächsten Scan angefügt usw.. Mit anderen Worten, aus jedem Messvorgang (Umlauf) werden die einzelnen Bursts mit den entsprechenden Scans als Dwell zusammengefasst und aneinandergereiht. Es werden also die Messungen, d.h. Scans, aus den einzelnen Umläufen aneinandergereiht. Diese Variante wird nachfolgend anhand eines Beispiels für 2 Umläufe (Messvorgänge) mit jeweils 3 Bursts und somit 2 Scans erläutert:

In einem 1. Umlauf liegen für den Burst 1 die Abtastwerte Scan 1, d.h. $S_1(B_1)$, für den Burst 2 die Abtastwerte Scan 1, d.h. $S_1(B_2)$ und für den Burst 3 die Abtastwerte Scan 1, d.h. $S_1(B_3)$ vor. In einem 2. Umlauf, welcher zeitlich nach dem 1. Umlauf erfolgt, liegen für den Burst 1 die Abtastwerte Scan 2, d.h. $S_2(B_1)$, für den Burst 2 die Abtastwerte Scan 2, d.h. $S_2(B_2)$ und für den Burst 3 die Abtastwerte Scan 2, d.h. $S_2(B_3)$ vor.

Die aus beiden Umläufen ermittelten Abtastwerte werden aneinandergereiht, wobei ein Phasenkorrekturterm K verwendet wird, welcher die Abtastwerte in den Scans 2 entsprechend, wie oben erläutert, verschiebt:

$$S_1B_1 \; S_1B_2 \; S_1B_3 \; K \; S_2B_1 \; S_2B_2 \; S_2B_3$$

Hierbei wird der Abschnitt $S_1B_1 \; S_1B_2 \; S_1B_3$ bzw. $S_2B_1 \; S_2B_2 \; S_2B_3$ jeweils als Dwell bezeichnet. Ein Vorteil dieser Staffelung der Scans ist, dass zwischen den Dwells nur ein Phasensprung korrigiert werden muss.

In einer zweiten Variante der Erfindung werden die entsprechenden Bursts aus zeitlich nacheinander erfolgten Messvorgängen aneinandergereiht. Diese Variante wird nachfolgend anhand eines Beispiels für 2 Umläufe (Messvorgänge) mit jeweils 3 Bursts und somit 2 Scans erläutert:

Wie beim Beispiel aus der ersten Variante liegen in einem 1. Umlauf für den Burst 1 die Abtastwerte Scan 1, d.h. $S_1(B_1)$, für den Burst 2 die Abtastwerte Scan 1, d.h. $S_1(B_2)$ und für den Burst 3 die Abtastwerte Scan 1, d.h. $S_1(B_3)$ vor. In einem 2. Umlauf, welcher zeitlich nach dem 1. Umlauf erfolgt, liegen für den Burst 1 die Abtastwerte Scan 2, d.h. $S_2(B_1)$, für den Burst 2 die Abtastwerte Scan 2, d.h. $S_2(B_2)$ und für den Burst 3 die Abtastwerte Scan 2, d.h. $S_2(B_3)$ vor.

Die für einen Burst ermittelten Abtastwerte aus beiden Umläufen werden aneinandergereiht, wobei ein Phasenkorrekturterm K verwendet wird, welcher die Abtastwerte aus verschiedenen Umläufen entsprechend, wie oben erläutert, verschiebt:

$$S_1B_1 \; K \; S_2B_1 \; K \; S_1B_2 \; K \; S_2B_2 \; K \; S_1B3_1 \; K \; S_2B_3$$

Bei dieser Form der Aneinanderreihung wird nach jedem Burst eine Phasenkorrektur K vorgenommen. Die Vorteile sind, dass das Ergebnis "geografisch" genauer ist, und dass aus den Zwischenergebnissen, ohne zusätzlichen Rechenaufwand eine genauere Auflösung des Gebietes möglich ist. Die genauere Auflösung ergibt sich daraus, dass die Zwischenergebnisse der gleichartigen Bursts (z.B.: Burst1 Scan1 und Burst1 Scan2) als Entfernungszelle darstellbar sind.

Gemäß der Erfindung wird mittels des Maximum-Likelihood Schätzers, zweckmäßig der Sinus Fit Algorithmus, aus der jeweiligen Aneinanderreihung eine harmonische Schwingung mit der kleinsten quadratischen Abweichung zu den Abtastwerten berechnet. Das Ergebnis ist eine Matrix in der für jede Zelle die Signalstärke, die Phase und die Frequenz des Ziels bekannt ist.

Erfindungsgemäß werden zwei zeitlich nacheinander erzeugte Ergebnismatrizen E1, E2 erzeugt und miteinander verglichen, wobei eine Zelle als Standort einer Windkraftanlage markiert wird, wenn folgende Merkmale erfüllt sind:

1) Signalstärke
Die Signalstärke der Zelle muss in jeder der beiden Ergebnismatrizen E1, E2 über einem gewissen Schwellwert liegen. Ist die Signalstärke der Zelle nur in einer der beiden Ergebnismatrizen E1, E2 über dem Schwellwert, kann es sich dabei nicht um eine Windkraftanlage handeln, da die WKA ortsfest ist und in beiden Ergebnismatrizen E1, E2 erscheinen muss. Im Fall, dass nur eine Ergebnismatrize E1, E2 den Schwellwert übersteigt, handelt es sich in den meisten Fällen um ein bewegtes Ziel.

2) Einschränken der möglichen Dopplerfrequenzverschiebung

D.h. wenn die Windgeschwindigkeit bekannt ist, ist somit auch der grobe Bereich der möglichen Rotorgeschwindigkeiten, aus denen sich die Dopplerfrequenzverschiebung ableitet, bekannt. Liegt nun der Wert der Entfernungszelle außerhalb diesen Bereiches, kann es sich nicht um eine WKA handeln.

3) Abweichung der gefundenen Dopplerfrequenzen zwischen den Ergebnismatritzen E1, E2. Aufgrund der Drehzahlregelung muss die gefundene Frequenz der Entfernungszelle in beiden Ergebnismatritzen E1, E2 im gleichen Bereich liegen. Unterscheiden sich die Frequenzen zu stark, kann das Echo eines empfangenen Sendesignals nicht von einer WKA stammen.

Werden alle Kriterien erfüllt, wird die entsprechende Zelle als Standort einer WKA markiert.

Durch das erfindungsgemäße Zusammenführen der Samples aus mehreren Scans, wird das grundlegende Problem es "Glint" Effektes von Windkraftanlagen im Einsatzbereich des Rundsuchradars gelöst. Durch die Vervielfachung der der Berechnung zu Grunde liegenden Daten wird eine über die Zeit annähernd konstante Auswertung und der anschließende Vergleich, der die Detektion zulässt, überhaupt erst ermöglicht.

Ein weiterer Vorteil liegt im aktiven Aufspüren der Standorte von Windkraftanlagen, anstatt wie bisher üblich die auftretenden Effekte nur zu unterdrücken. Das gezielte Ausnutzen der Merkmale ermöglicht es einfach zwischen Windkraftanlagen und anderen Zielen zu unterscheiden. Außerdem sind nicht wie bisher andere Informationsquellen über den Standort von Windkraftanlagen im Einsatzbereich des Radar notwendig, um die entsprechenden Bereiche zu markieren.

Das Verfahren kann sehr leicht an den jeweiligen Radartyp (Anzahl der Bursts, Umlaufzeit, Abtastzeitpunkte, usw.) angepasst werden.

Für jede Entfernungszelle werden die Parameter Frequenz und Amplitude direkt bestimmt, welche für mögliche weitere Auswertungen und Verarbeitung wichtige Eingangsdaten darstellen.

Der Frequenzbereich ist beliebig genau skalierbar, d.h. der Suchbereich kann auf die vorherrschenden Bedingungen angepasst werden. Frequenzbereiche die keinerlei Rolle spielen werden bereits durch die Verarbeitung ignoriert.

Durch das gezielte Aufspüren und Markieren der durch Windkraftanlagen betroffenen Bereiche, ist es möglich eine einfache Unterscheidung zwischen Bewegtzielen und Windkraftanlagen zu treffen. Dies führt wiederum dazu dass das Tracking eines Zieles im Bereich von Windkraftanlagen entscheidend verbessert wird.

## Literatur

[Mahr et al.] Thomas Mahr, Hans-Georg Kölle. Non equidistant sampling of radar signals. In Proceedings of the International Radar Symposium (IRS) 2005 Berlin, Germany Seite 831-835, 2005

## Patentansprüche

1.   Verfahren zur Detektion von Windkraftanlagen mittels einer Radaranlage, wobei

a. zeitlich nacheinander werden eine Anzahl N vorgebbarer Folgen $B_x$, mit x=1,...,N, von K modulierten Sendeimpulsen mit jeweils einer vorgebbaren Pulsfolgefrequenz ausgesandt,
b. es wird eine vorgebbare Anzahl von Pulsfolgefrequenzen verwendet,
c. nach jeder ausgesandten Folge wird zyklisch auf eine andere Pulsfolgefrequenz umgeschaltet,
d. von einem Objekt reflektierte Sendeimpulse werden von der Radaranlage empfangen und verarbeitet derart, dass den Sendeimpulsen entsprechende Empfangsimpulse entstehen, wobei für jeden Sendeimpuls eine Anzahl R Empfangsimpulse empfangen werden,
e. aus den zu Folgen $B_x$ von modulierten Sendeimpulsen gehörenden Empfangsimpulsen wird mittels Signallaufzeitmessung die Entfernung zu dem Objekt ermittelt, und eine Entfernungs-Doppler-Matrix mit R Zeilen und N*K Spalten erzeugt,

**dadurch gekennzeichnet, dass**

f. in einem Azimuthbereich zyklisch eine Anzahl M von Messvorgängen in eine Azimuthrichtung durchgeführt wird, wobei bei jedem Messvorgang N Folgen $B_x$ von modulierten Sendeimpulsen in die jeweilige Azimuthrichtung ausgesendet werden, und für jeden Messvorgang M eine Entfernungs-Doppler Matrix erzeugt wird,

g. Abtastwerte von Z, mit Z=2...N, Folgen $B_N$ von modulierten Sendeimpulsen aus M Messvorgängen werden mittels eines vorgebbaren Korrekturterms aneinandergereiht und verarbeitet, wobei mittels des Sinus-Fit-Algorithmus als Maximum Likelihood Schätzer eine harmonische Schwingung mit der kleinsten quadratischen Abweichung zu den Abtastwerten berechnet wird, derart, dass, bei Vorliegen der Abtastwerte $f_n = f(x_n)$ der komplexen sinusförmigen Schwingung mit den Parametern Amplitude A, Phase $\alpha$ und Frequenz f , die gesuchten Parameter durch das Minimieren des Parameters Q ermittelt werden gemäß

$$Q := \sum_{n-1}^{N} (g(x_n) - f_n) * conj(g(x_n) - f_n),$$ , wobei g eine Modellfunktion mit den Parametern $p_1,...,p_n$

und $f_n$ die Abtastwerte sind,

h. durch Anwenden des Maximum Likelihood Schätzer aus der Entfernungs Doppler Matrix mit R Zeilen und N*K Spalten eine Ergebnismatrix mit R Zeilen und N/Z Spalten berechnet wird, wobei für jede Zelle die Signalstärke, Phase und Dopplerfrequenz des Objekts bekannt ist,

i. nach den Verfahrensschritten a)-h) werden zeitlich nacheinander zwei Ergebnis-matrizen E1, E2 erzeugt, welche miteinander verglichen werden, wobei eine Entfernungs-Dopplerzelle als Standort einer Windkaftanlage markiert wird, wenn

i. die Signalstärke einer Entfernungs-Dopplerzelle in beiden Ergebnismatrizen (E1, E2) oberhalb eines vorgebbaren Schwellwertes liegt und

ii. die Dopplerfrequenzverschiebung in einer Entfernungs-Dopplerzelle in beiden Ergebnismatrizen (E1, E2) innerhalb eines für Windkraftanlagen üblichen Wertebereichs liegt und

iii. die Differenz der Dopplerfrequenzen in einer Entfernungs-Dopplerzelle in beiden Ergebnismatrizen (E1, E2) unterhalb eines vorgegeben Schwellwertes liegt.

2. Verfahren nach Anspruch 1,
**dadurch gekennzeichnet, dass**
bei der Aneinanderreihung der Folgen $S_m(B_x)$, mit m=1...M, von Abtastwerten aus M Messvorgängen eine Phasenkorrektur benachbarter Folgen $S_m(B_x)$ von Abtastwerten berücksichtigt wird, wenn die benachbarten Folgen $S_m(B_x)$ von Abtastwerten aus unterschiedlichen Messvorgängen stammen.

3. Verfahren nach Anspruch 2,
**dadurch gekennzeichnet, dass**
die Aneinanderreihung der Folgen $S_m(B_x)$ von Abtastwerten aus M Messvorgängen folgendermaßen erfolgt:

S1(B1), $S_1(B_2)$,..., $S_1(B_N)$, K, $S_2(B_1)$, $S_2(B_2)$,..., $S_2(B_N)$,..., K, $S_M(B_1)$, $S_M(B_2)$,..., $S_M(B_N)$,

wobei K ein Phasenkorrekurterm ist.

4. Verfahren nach Anspruch 2,
**dadurch gekennzeichnet, dass**
die Aneinanderreihung der Folgen $S_m(B_x)$ von Abtastwerten aus M Messvorgängen folgendermaßen erfolgt:

$S_1(B_1)$, K, $S_2(B_1)$, K, ..., K, $S_M(B_1)$, K, $S_1(B_2)$, K, $S_2(B_2)$, K, ..., K, $S_M(B_2)$, K, ..., K, $S_1(B_N)$, K, $S_2(B_N)$, K, ..., K, $S_M(B_N)$,

wobei K ein Phasenkorrekurterm ist.

5. Verfahren nach Anspruch 3 und 4,
**dadurch gekennzeichnet, dass**
mittels des Phasenkorrekturterms K die Abtastzeitpunkte einer in der Reihenfolge nachgestellten Folge derart verschoben werden, dass benachbarte Folgen $S_m(B_x)$ die gleiche Phase besitzen.

**Claims**

1. Method for detection of wind power installations by means of a radar installation, wherein

a. a number N of predeterminable sequences $B_x$, where x=1,...,N, of K modulated transmission pulses are transmitted, in each case at a predeterminable pulse repetition frequency, successively in time,

b. a predeterminable number of pulse repetition frequencies are used,

c. after each transmitted sequence, cyclic switching takes place to a different pulse repetition frequency,

d. transmission pulses reflected by an object are received and processed by the radar installation such that received pulses which correspond to the transmission pulses are created, wherein a number R of received pulses are received for each transmission pulse,

e. the range to the object is determined by means of signal delay-time measurement from the received pulses which belong to the sequences $B_x$ of modulated transmission pulses, and a range Doppler matrix is produced, with R rows and N*K columns,

**characterized in that**

f. a number M of measurement processes are carried out cyclically in an azimuth direction in an azimuth range, wherein N sequences $B_x$ of modulated transmission pulses are transmitted in the respective azimuth direction for each measurement process, and a range Doppler matrix is produced for each measurement process M,

g. sample values of Z, where Z=2...N, sequences $B_N$ of modulated transmission pulses from M measurement processes are arranged in sequence by means of a predeterminable correction term, and are processed, wherein a harmonic oscillation with the least square error with respect to the sample values is calculated by means of the sine-fit algorithm as maximum likelihood estimator, such that when sample values $f_n = f(x_n)$ of the complex sinusoidal oscillation are available with the parameters amplitude A, phase $\alpha$ and frequency f, the sought parameters are determined by minimizing the parameter Q according to

$$Q := \sum_{n-1}^{N} (g(x_n) - f_n) * conj(g(x_n) - f_n) \ , \quad \text{, where g is a model function with the parameters } p_1,...,p_n$$

and $f_n$ are the sample values,

h. a result matrix with R rows and N/Z columns is calculated from the range Doppler matrix with R rows and N*K columns by use of the maximum likelihood estimator, wherein the signal strength, phase and Doppler frequency of the object are known for each cell,

i. after method steps a)-h), two result matrices E1, E2 are produced successively in time and are compared with one another, wherein a range Doppler cell is marked as a location of a wind power installation if

    i. the signal strength of a range Doppler cell is above a predeterminable threshold value in both result matrices (E1, E2), and

    ii. the Doppler frequency shift in a range Doppler cell is within a normal value range for wind power installations in both result matrices (E1, E2), and

    iii. the difference between the Doppler frequencies in a range Doppler cell in both result matrices (E1, E2) is below a predetermined threshold value.

2. Method according to Claim 1,
**characterized in that**,
when the sequences $S_m(B_x)$, where m=1...M, of sample values from M measurement processes are arranged in sequence, a phase correction of adjacent sequences $S_m(B_x)$ of sample values is taken into account, if the adjacent sequences $S_m(B_x)$ originate from sample values from different measurement processes.

3. Method according to Claim 2,
**characterized in that**
the arrangement of the sequences $S_m(B_x)$ of sample values from M measurement processes in sequence is carried out as follows:

    S1(B1), $S_1(B_2)$,..., $S_1(B_N)$, K, $S_2(B_1)$, $S_2(B_2)$,..., $S_2(BN)$,..., K, $S_M(B_1)$, $S_M(B_2)$,..., $S_M(B_N)$,

where K is a phase correction term.

4. Method according to Claim 2,
**characterized in that**
the arrangement of the sequences $S_m(B_x)$ of sample values from M measurement processes in sequence is carried

out as follows:

$$S_1(B_1), K, S_2(B_1), K, ..., K, S_M(B_1), K, S_1(B_2), K, S_2(B_2), K, ..., K, S_M(B_2), K, ..., K, S_1(B_N), K, S_2(B_N), K, ..., K, S_M(B_N),$$

where K is a phase correction term.

5. Method according to Claims 3 and 4,
**characterized in that**
the phase correction term K is used to shift the sampling times of a sequence of successive items such that adjacent sequences $S_m(B_x)$ have the same phase.

**Revendications**

1. Procédé de détection d'éoliennes au moyen d'un système radar, dans lequel

a. un nombre N de séries prédéterminées $B_x$ se suivant dans le temps, avec x = 1, ..., N, de K impulsions d'émission modulées ayant chacune une fréquence de répétition d'impulsions prédéterminée sont émises,
b. un nombre prédéterminé de fréquences de répétition d'impulsions est utilisé,
c. après chaque série émise un basculement est effectué de manière cyclique sur une autre fréquence de répétition d'impulsions,
d. des impulsions d'émission réfléchies par un objet son reçues par le système radar et sont traitées de telle manière que des impulsions de réception correspondant aux impulsions d'émission se produisent, un nombre R d'impulsions de réception étant reçues pour chaque impulsion d'émission,
e. la distance de l'objet est déterminée au moyen d'une mesure du temps de propagation du signal à partir des impulsions de réception appartenant à des séries $B_x$ d'impulsions d'émission modulées et une matrice distance-doppler de R lignes et N*K colonnes est générée,

**caractérisé en ce que**

f. un nombre M de processus de mesure sont effectués cycliquement dans une direction azimutale d'une région d'azimut, N séries $B_x$ d'impulsions d'émission modulées étant émises dans la direction azimutale respective lors de chaque processus de mesure et, pour chaque processus de mesure M, une matrice distance-doppler est générée,
g. des valeurs échantillons de Z, avec Z=2...N, séries $B_N$ d'impulsions d'émission modulées sont alignées séquentiellement et traitées à partir de M processus de mesure au moyen d'un terme de correction prédéterminé, une oscillation harmonique présentant l'écart quadratique le plus faible par rapport aux valeurs échantillons étant calculée au moyen de l'algorithme d'ajustement de sinus en tant qu'estimateur de maximum de vraisemblance, de telle manière que lors de la présence de la valeur échantillon $f_n = f(x_n)$ des oscillations sinusoïdales complexes avec les paramètres d'amplitude A, de phase $\alpha$ et de fréquence f, les paramètres recherchés soient obtenus par minimisation des paramètres Q conformément à

$$Q := \sum_{n=1}^{N} (g(x_n) - f_n) * conj(g(x_n) - f_n) \, ,$$  , où g est une fonction de modélisation de paramètres $p_1$, ...,

$p_n$ et $f_n$ sont les valeurs échantillons,
h. en utilisant l'estimateur de maximum de vraisemblance, une matrice résultat de R lignes et N/Z colonnes est calculée à partir de la matrice distance-doppler de R lignes et N*K colonnes, l'intensité du signal, la phase et la fréquence doppler de l'objet étant connues pour chaque cellule,
i. conformément aux étapes a)-h) du procédé, deux matrices résultats E1 et E2 sont générées séquentiellement dans le temps, lesquelles matrices sont comparées l'une à l'autre, une cellule distance-doppler étant marquée en tant que position d'une éolienne lorsque

i. l'intensité de signal d'une cellule distance-doppler est supérieure à une valeur de seuil prédéterminée dans les deux matrices résultats (E1, E2) et
ii. le décalage de fréquence doppler se situe à l'intérieur d'une région de valeurs courantes pour des éoliennes dans les deux matrices résultats (E1, E2) et

iii. la différence entre les fréquences doppler dans une cellule distance-doppler est inférieure à une valeur de seuil prédéterminée dans les deux matrices résultats (E1, E2).

2. Procédé selon la revendication 1, **caractérisé en ce que**, lors de l'alignement séquentiel des séries $S_m(B_x)$, avec m=1...M, de valeurs échantillons provenant de M processus de mesure, une correction de phase de séries voisines $S_m(B_x)$ de valeurs échantillons est prise en compte lorsque les séries voisines $S_m(B_x)$ de valeurs échantillons proviennent de processus de mesure différents.

3. Procédé selon la revendication 2, **caractérisé en ce que** l'alignement séquentiel des séries $S_m(B_x)$ de valeurs échantillons provenant de M processus de mesure s'effectue comme suit :

$$S_1(B_1), S_1(B_2), ..., S_1(B_N), K, S_2(B_1), S_2(B_2), ..., S_2(B_N), ..., K, S_M(B_1), S_M(B_2), ..., S_M(B_N),$$

K étant un terme de correction de phase.

4. Procédé selon la revendication 2, **caractérisé en ce que** l'alignement séquentiel des séries $S_m(B_x)$ de valeurs échantillons provenant de M processus de mesure s'effectue comme suit :

$$S_1(B_1), K, S_2(B_1), K, ..., K, S_M(B_1), K, S_1(B_2), K, S_2(B_2), K, ..., K, S_M(B_2), K, ..., K, S_1(B_N), K, S_2(B_N), K, ..., K, S_M(B_N),$$

K étant un terme de correction de phase.

5. Procédé selon les revendications 3 et 4, **caractérisé en ce que** les instants d'échantillonnage d'une série suivante de la séquence sont décalés au moyen du terme de correction de phase K de telle manière que des séries voisines $S_m(B_x)$ possèdent la même phase.

EP 2 404 190 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 200811131 A1

- EP 0919834 B1

**In der Beschreibung aufgeführte Nicht-Patentliteratur**

- **C.A. JACKSON.** Windfarm Characteristics and their Effect on Radar Systems. *Proc. International Conference on Radar Systems,* Oktober 2007

- **THOMAS MAHR ; HANS-GEORG KÖLLE.** Non equidistant sampling of radar signals. *Proceedings of the International Radar Symposium,* 2005, 831-835